**Europäisches Patentamt**

**European Patent Office**

**Office européen des brevets**

(11) Veröffentlichungsnummer: **0 279 062**
**B1**

(19)

# (12) EUROPÄISCHE PATENTSCHRIFT

(45) Veröffentlichungstag der Patentschrift:
09.05.90

(21) Anmeldenummer: 87118808.2

(22) Anmeldetag: 18.12.87

(51) Int. Cl.⁵: **F16L 29/00**, F16K 15/14,
B60K 25/04, F16J 3/02

(54) Unterdruckverteilerdose.

(30) Priorität: 18.02.87 DE 3705060

(43) Veröffentlichungstag der Anmeldung:
24.08.88 Patentblatt 88/34

(45) Bekanntmachung des Hinweises auf die Patenterteilung:
09.05.90 Patentblatt 90/19

(84) Benannte Vertragsstaaten:
FR GB IT SE

(56) Entgegenhaltungen:
DE-A- 2 628 314
DE-A- 3 137 969
FR-A- 2 434 317
GB-A- 2 166 840

(73) Patentinhaber: **Daimler-Benz Aktiengesellschaft,
Postfach 600202 Mercedesstrasse 136,
D-7000 Stuttgart 60(DE)**
Patentinhaber: **Walter Alfmeier GmbH + Co. KG,
Industriestrasse 5, D-8830 Treuchtlingen(DE)**

(72) Erfinder: **Feichtiger, Dieter, Mittelbühlweg 38,
D-7031 Aidlingen 1(DE)**
Erfinder: **Kneib, Rudi, Auf der Stelle 25,
D-7032 Sindelfingen(DE)**
Erfinder: **Weikert, Günther, Kalkofenweg 23/9,
D-7252 Weil der Stadt 5(DE)**
Erfinder: **Schneider, Wolfgang, Gartenstrasse 9/1,
D-7260 Calw-Stammheim(DE)**
Erfinder: **Heimbrodt, Klaus.-J.,
Gottfried-Keller-Strasse 8, D-8830 Treuchtlingen(DE)**
Erfinder: **Simon, Dieter, Th.-Fontane-Strasse 7,
D-8830 Treuchtlingen(DE)**
Erfinder: **Hoffmann, Rüdiger, Königsknollstrasse 29,
D-7032 Sindelfingen(DE)**
Erfinder: **Reinhard, Theodor, Panoramastrasse 46,
D-7030 Böblingen(DE)**

## Beschreibung

Die Erfindung bezieht sich auf eine Unterdruckverteilerdose mit den Merkmalen des Oberbegriffes des Patentanspruches 1.

Eine gattungsgemäße Unterdruckverteilerdose ist bekannt (DE-A 2 617 132).
Sie weist mehrere Unterdruckanschlüsse auf, die gruppenweise an eine gemeinsame Unterdruckkammer angeschlossen sind und innerhalb der Gruppen nicht gegeneinander abschließbar sind. Zum wahlweisen Anschließen eines Prüfwerkzeuges ist jeder dieser Gruppen ein weiterer (Prüf-) Unterdruckanschluß zugeordnet, welcher durch ein Rückschlagventil gegen die Unterdruckkammer abschließbar ist. Dieses Rückschlagventil wird mit einer so hohen Federkraft gegen seinen Dichtsitz vorgespannt, daß auch die maximal auftretende Druckdifferenzkraft aus Unterdruck kammerseitig und Atmosphärendruck von außen es nicht gegen die Federkraft öffnen kann. Nur durch mechanische Einwirkung, nämlich durch das Einstecken der Unterdruckleitung des Prüfwerkzeuges, wird das Rückschlagventil geöffnet und gibt den betreffenden Unterdruckanschluß frei. Wird die Leitug wieder entfernt, so schließt sich das Rückschlagventil unverzüglich.

Derartige Rückschlagventilsicherungen von Fluidanschlüssen sind auch für steckbare Schlauch-oder Rohrkupplungen bekannt (z.B. DE-C 683 540). Den bekannten Ausführungen ist jedoch der Nachteil gemeinsam, daß ein verhältnismäßig hoher Aufwand zum Abdichten einerseits der Rückschlagventile, andererseits der einsteckbaren Fluidanschlüsse notwendig ist. Bei Unterdruckverteilerdosen mit Gruppen von Unterdruckanschlüssen an gemeinsamen Unterdruckkammern müssen ferner alle Unterdruckanschlüsse einer Gruppe besetzt sein - Anschlüsse ohne Funktion also z.B. durch zusätzliche Blindstopfen - , damit nicht über einen frei bleibenden Unterdruckanschluß und die gemeinsame Unterdruckkammer die anderen Anschlüsse der Gruppe belüftet werden.

Die Erfindung hat die Aufgabe, eine gattungsgemäße Unterdruckverteilerdose so auszubilden, daß ohne zusätzliche Vorkehrungen variable Anzahlen von Unterdruckleitungen an gemeinsame Unterdruckkammern bei geringem Aufwand für die Abdichtung der Unterdruckanschlüsse und -leitungen angeschlossen werden können.

Diese Aufgabe wird mit den kennzeichnenden Merkmalen des Hauptanspruchs gelöst.

Die Merkmale der Unteransprüche kennzeichnen vorteilhafte Weiterbildungen der erfindungsgemäßen Unterdruckverteilerdose.

Bei der Ausrüstung jedes einzelnen Unterdruckanschlusses mit einem Rückschlagventil wird mit der beanspruchten Ausbildung in vorteilhafter Weise der Aufwand zur Abdichtung des Gehäuses der Unterdruckverteilerdose, der Rückschlagventilsitze und der einzusteckenden Unterdruckleitungen stark vermindert, indem eine einstückige Membrandichtung zwischen beiden Gehäuseteilen allseitig eingespannt wird, die ferner Durchbrüche aufweist, welche in Anzahl und Position der Anzahl und räumlichen Anordnung der Unterdruckanschlüsse entsprechen. Die Ränder der Durchbrüche bilden dabei zum einen die Ventildichtsitze für die Rückschlagventile, zum anderen legen sie sich an eingesteckte Unterdruckleitungen dichtend an. Die Membrandichtung erfüllt also einstückig drei Dichtfunktionen gleichzeitig. Die Anzahl von einzusetzenden Dichtungen bzw. feinbearbeiteter Dichtflächen im Gehäuse wird deutlich verringert, dadurch vereinfacht sich auch der Zusammenbau der Unterdruckverteilerdose bedeutend.

Die gemeinsamen Unterdruckkammern der Unterdruckanschlüsse werden beim gattungsbildenden Stand der Technik (DE-A 2 617 132) durch je ein Schutzventil gegen das Eindringen von Umgebungsdruck von der Saugseite her geschützt. Diese Dichtfunktion kann in vorteilhafter Weiterbildung der erfindungsgemäßen Unterdruckverteilerdose als vierte von der Membrandichtung erfüllt werden.

Zwar ist es bereits bekannt, ein Rückschlag-Schutzventil einer Unterdruckkammer mit mehreren Unterdruckanschlüssen als Rollbalgabschnitt in eine Membrandichtung einzuformen, die zwischen zwei Gehäusehälften eingespannt ist (DE-A 3 031 625). Jedoch gibt die bekannte Anordnung keinen Hinweis darauf, die Membrandichtung mit weiteren Durchbrüchen zu versehen und eine Absaugluftströmung dreimal durch die Membrandichtung hindurchzuleiten. Ferner ist die Ausrüstung von Unterdruckanschlüssen mit Rückschlagventilen, die nur mechanisch durch das Einstecken von Unterdruckleitungen geöffnet werden können, aus dieser bekannten Ausführung einer Unterdruckverteilerdose nicht herleitbar.

Auch im eingebauten und mit Unterdruck beaufschlagten Zustand der erfindungsgemäßen Unterdruckverteilerdose ist nunmehr das Abnehmen, Austauschen oder Neueinstecken von Unterdruckleitungen möglich, ohne daß gleichzeitig ein Druckanstieg in den anderen Unterdruckanschlüssen bzw. -verbrauchern erfolgt.

Der einfachen Handhabung kommt eine Klipsverbindung zwischen Unterdruckverteilerdose und -leitungen zugute, während die beanspruchte Ausbildung der Rückschlagventilkörper als Kegel mit Ausnehmungen die Verwendung gewöhnlicher Rohrenden an den Unterdruckleitungen ermöglicht, ohne daß etwa zentrisch angeordnete Betätigungsstößel oder dergleichen zum Zurückdrücken und Öffnen der Rückschlagventile vorzusehen wären, wie es z.B. bei den Anschlüssen von Reifendruckprüfgeräten der Fall ist.

Weitere Einzelheiten sind der im folgenden näher beschriebenen Zeichnung zu entnehmen, die ein Ausführungsbeispiel einer erfindungsgemäßen Unterdruckverteilerdose darstellt.

Eine Unterdruckverteilerdose 1 ist aus einem Gehäuseunterteil 2 und einem Deckel 3 aufgebaut, welche mittels über den Außenumfang der Unterdruckverteilerdose 1 verteilter Klipsverbindungen 4 miteinander verrastet sind und eine Membrandichtung 5 zwischen ihren Außenwänden zur Trennfugenabdichtung allseitig einspannen. Am Gehäuseunterteil 2 ist ein einzelner Sauganschluß 6 vorgesehen, an welchen ein nicht dargestellter Unterdruckerzeuger angeschlossen werden kann. Der Deckel 3 weist mehrere Unterdruckanschlüsse 7, 7' auf, von denen jeweils nur einer dargestellt ist, wobei in den Unterdruckanschluß 7' eine Unterdruckleitung 8 eingesteckt und darin mit einer - an allen Unterdruckanschlüssen 7, 7' und am Sauganschluß 6 vorgesehenen - Rastverbindung aus federnden Halterungszungen 9 mit Rastnasen 10 gesichert ist.

Im Einmündungsbereich der Unterdruckanschlüsse 7 und 7' liegt die Membrandichtung 5 innen am Deckel 3 an und ist mit Durchbrüchen 11 versehen, die O-Ring-artige, wulstförmige Ränder 12 haben. Die Durchbrüche 11 sind axial fluchtend zu den Unterdruckanschlüssen 7 und 7' angeordnet.

Jedem Unterdruckanschluß 7, 7' ist ein Rückschlagventil 13 zugeordnet, welches jeweils aus einem Ventilkörper 14, einer Ventilfeder 15, einer Ventilführung 16 im Gehäuseunterteil 2 und einem von dem wulstförmigen Rand 12 des entsprechenden Durchbruchs 11 der Membrandichtung 5 gebildeten Ventildichtsitz aufgebaut ist.

Jeder Ventilkörper 14 hat eine dem jeweiligen Unterdruckanschluß 7, 7' zugewandte Kegelkontur mit einer Kegelspitze 17 und einem am Ventildichtsitz zur Anlage kommenden Kreisquerschnitt 18. In dem Bereich zwischen der Kegelspitze 17 und dem Kreisquerschnitt 18 sind Ausnehmungen 19 in die Kegelkontur der Ventilkörper 14 eingeformt. Diese bilden Überströmkanäle für die Entlüftungsströmung von einem Unterdruckanschluß zum Sauganschluß, wenn durch eine Unterdruckleitung 8 der Ventilkörper 14 von seinem Ventildichtsitz weggeschoben ist, wie es am Unterdruckanschluß 7' dargestellt ist. Die Ventilführungen 16 führen die Ventilkörper 14 mit geringem radialem Spiel, so daß sich ein zwar enger, jedoch ausreichender Strömungsquerschnitt entlang den Ventilkörpern 14 ergibt.

Außer der Einspannung am Außenumfang der Unterdruckverteilerdose 1 ist die Membrandichtung 5 ferner rings um die Durchbrüche 11 sowie auch rings um einen Rollbalgabschnitt 20 zwischen dem Gehäuseunterteil 2 und dem Deckel 3 abgestützt. Die Abstützungen rings um die Durchbrüche 11 verhindern Ausweichbewegungen der Membrandichtung 5 beim Einführen von Unterdruckleitungen 8, so daß letztere durch die Durchbrüche 11 geschoben werden können, wobei sich der wulstförmige Rand 12 des jeweiligen Durchbruchs 11 in der Art einer O-Ring-Dichtung an die Unterdruckleitung 8 anlegt.

Am Sauganschluß 6 ist eine Gummi-Rundschnurdichtung 21 eingesetzt.

Der Rollbalgabschnitt 20 wird von einem rotationssymmetrischen Stützkörper 22 zentrisch versteift und geführt. Eine Schraubendruckfeder 23 stützt sich zwischen einer Innenwand des Gehäuseunterteils 2 und dem Stützkörper 22 ab und drückt über letzteren den Rollbalgabschnitt 20 mit einer ringförmigen Kontaktfläche 24 gegen eine Stumpfkegelkontur 25 der Innenwand des Deckels 3. Der Rollbalgabschnitt 20 der Membrandichtung 5 bildet im Verein mit der Stumpfkegelkontur 25 des Deckels 3 und der weichen Schraubendruckfeder 23 ein Schutzventil 26, welches funktionsgemäß ebenfalls ein Rückschlagventil darstellt, jedoch zur begrifflichen Unterscheidung von den Rückschlagventilen 13 hier anders bezeichnet wird. Das Schutzventil 26 wird durch Druckdifferenzen gegen die Kraft der Feder 23 geöffnet. Eine Öffnung 27 ist im Stützkörper 22 und im Rollbalgabschnitt 20, innerhalb der ringförmigen Kontaktfläche 24, als Strömungsdurchlaß vorgesehen.

Eine weitere Öffnung 28 im Einspannbereich des Rollbalgabschnitts 20 außerhalb der Kontaktfläche 24 bildet einen Strömungskanal zwischen dem links dargestellten Rückschlagventil 13 am Unterdruckanschluß 7' und dem Schutzventil 26. Dieser Strömungskanal setzt sich durch einen Öffnungsspalt 29 fort, der in einem Ringteil 30 vorgesehen ist, welches einstückig an den Deckel 3 angeformt ist und konzentrisch rings um die Stumpfkegelkontur 25 verläuft.

Der Unterdruckanschluß 7 ist mit dem Sauganschluß 6 über einen kanal 31 direkt verbunden. Wie bereits erwähnt wurde, können weitere, nicht dargestellte Unterdruckanschlüsse 7 vorgesehen und direkt mit dem Sauganschluß 6 verbunden sein. Alle Anschlüsse 7 sind nur durch Rückschlagventile 13 abschließbar.

Dagegen ist der dargestellte Unterdruckanschluß 7' und sind weitere, nicht dargestellte Unterdruckanschlüsse 7' sowohl durch das Schutzventil 26 als Gruppe als auch durch Rückschlag ventile 13 einzeln abschließbar. Denn fluidisch sind das Schutzventil 26 und das links dargestellte Rückschlagventil 13 in Reihe geschaltet. Gegenüber dem Sauganschluß 6 schließt das Schutzventil 26 eine Unterdruckkammer 32 ab, an die eine Gruppe von Unterdruckanschlüssen 7' angeschlossen sein kann. Selbstverständlich können in der Unterdruckverteilerdose 1 weitere Schutzventile 26, Unterdruckkammern 32 und Gruppen von Unterdruckanschlüssen 7' vorgesehen werden. Bei der Fertigung des Gehäuseunterteils 2 sind die entsprechenden Kammerwände und Kanäle in das Kunststoffspritzteil einfach zu integrieren, ebenso können in die Membrandichtung 5 einstückig mehrere Rollbalgabschnitte 20 und Öffnungen 27, 28 eingeformt werden.

Eine Absaugströmung von einem Unterdruckanschluß 7' mit eingesteckter Unterdruckleitung 8 zum Sauganchluß 6 passiert zunächst die Ausnehmungen 19 des Ventilkörpers 14, vorbei an dem auf der kegelkontur des Ventilkörpers 14 aufsitzenden Rohrende der Unterdruckleitung 8, gelangt zur Ventilführung 16, passiert die Öffnung 28 der Membrandichtung 5 und den Öffnungsspalt 29 des Ringteils 30 zur Unterdruckkammer 32 und gelangt schließlich zwischen der Kontaktfläche 24 der Membrandichtung 5 und der Stumpfkegelkontur 25 des Deckels 3 hindurch zur Öffnung 27 der Membrandichtung 5 und des Stützkörpers 22 und von dort schließlich zum Sauganschluß 6. Auf diesem Weg wird die Strömung dreimal durch die Membrandichtung 5 geführt, zuerst am Durchbruch 11, dann durch die Öffnung 28 und schließlich durch die Öffnung 27.

Durch ein Schutzventeil 26 kann jeweils eine Gruppe von Unterdruckanschlüssen 7' oder auch ein einzelner gegen einen Druckanstieg in der Unterdruckverteilerdose 1 auch bei eingesteckten Unterdruckleitungen 8 und offenen Rückschlagventilen 13 abgeschlossen werden, während durch die Rückschlagventile 13 unbesetzte Anschlüsse 7 oder 7' - letztere auch in Gruppenanordnung - abgeschlossen werden, so daß Zusatzmaßnahmen gegen Belüftung - wie etwa Blindstopfen - entfallen können.

Hauptvorteil der erfindungsgemäßen Unterdruckverteilerdose ist jedoch die geringe Anzahl benötigter Dichtungsteile, nämlich zwei Stück: die Membrandichtung 5 und der Dichtring 21 am Sauganschluß 6.

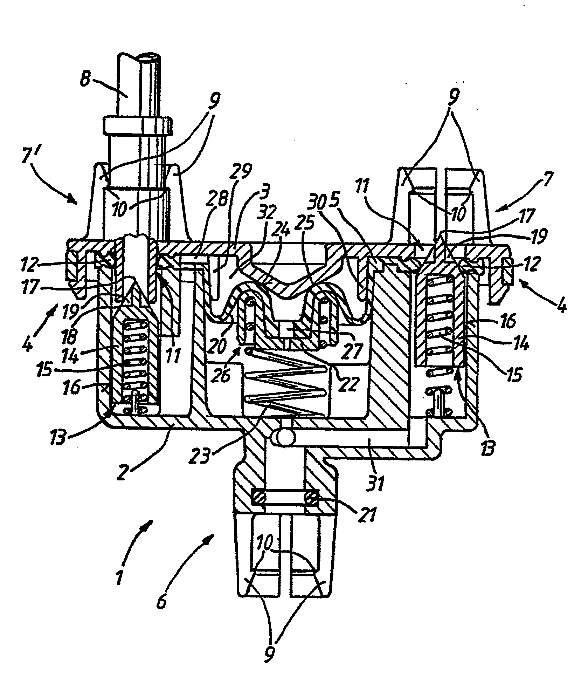

## Patentansprüche

1. Unterdruckverteilerdose mit einem Sauganschluß und mehreren Unterdruckanschlüssen an einem Gehäuse, deren zum nur wahlweisen Anschluß von Unterdruckleitungen vorgesehene Unterdruckanschlüsse mit federbelasteten Rückschlagventilen ausgestattet sind, deren Federvorspannkraft die maximal auftretende Druckdifferenzkraft von Umgebungs- und Unterdruck überwiegt und deren Dichtwirkung nur durch Einstecken der wahlweise anzuschließenden Unterdruckleitungen und mechanisches Verschieben ihrer Ventilkörper durch die Unterdruckleitungen aufgehoben wird, **dadurch gekennzeichnet,** daß das Gehäuse der Unterdruckverteilerdose (1) zweiteilig ausgeführt und durch eine zwischen beiden Gehäuseteilen (2, 3) allseitig eingespannte, Durchbrüche (11) in einer der Zahl der Unterdruckanschlüsse (7, 7') entsprechenden Anzahl im Mündungsbereich der Unterdruckanschlüsse (7, 7') aufweisende elastische Membrandichtung (5) nach außen abgedichtet ist und daß die Durchbrüche (11) der membrandichtung (5) an ihren Rändern (12) zum einen als Ventildichtsitze der Rückschlagventile (13) der Unterdruckanschlüsse (7, 7')·und zum anderen als Ringdichtungen für die angeschlossenen Unterdruckleitungen (8) ausgeführte Dichtflächen aufweisen.

2. Unterdruckverteilerdose nach Anspruch 1, mit wenigstens einem gegen Federkraft bei Unterdruckbeaufschlagung über den Sauganschluß öffnenden, zwischen dem Sauganschluß und wenigstens einem Unterdruckanschluß angeordneten, bei Eindringen von Umgebungsdruck in die Verteilerdose sich mit einer ringförmigen Kontaktfläche an eine Gehäuseinnenwand anlegenden Schutzventil, **dadurch gekennzeichnet,** daß das Schutzventil (26) in die Membrandichtung (5) einstückig als Rollbalgabschnitt (20) mit einer Öffnung (27) innerhalb der Kontaktfläche (24) eingeformt ist, wobei der Rollbalgabschnitt (20) allseitig zwischen den Gehäuseteilen (2, 3) eingespannt ist und wenigstens eine weitere, durch seine Einspannung verlaufende Öffnung (28) außerhalb der Kontaktfläche (24) aufweist, welche - bezogen auf eine Luftströmung von Unterdruck - zu Sauganschluß - zwischen dem Rückschlagventil (13) an dem betreffenden Unterdruckanschluß (7') und dem Schutzventil (26) angeordnet ist.

3. Unterdruckverteilerdose nach Anspruch 2, **dadurch gekennzeichnet,** daß sowohl nur durch ein Rückschlagventil (13) abschließbare Unterdruckanschlüsse (7) als auch durch ein Rückschlagventil (13) und ein Schutzventil (26) abschließbare Unterdruckanschlüsse (7') nebeneinander vorgesehen sind.

4. Unterdruckverteilerdose nach einem der vorangehenden Ansprüche, **dadurch gekennzeichnet,** daß die Unterdruckanschlüsse (7, 7') und der Sauganschluß (6) federnde Halterungszungen (9) mit Rastnasen (10) aufweisen, die einfaches Einstecken und Verrasten der anzuschließenden Unterdruckleitungen (8) ermöglichen.

5. Unterdruckverteilerdose nach Anspruch 1, **dadurch gekennzeichnet,** daß die Ventilkörper (14) der Rückschlagventile (13) an ihren den jeweiligen Unterdruckanschlüssen (7, 7') zugewandten Enden eine Kegelkontur aufweisen und daß im Bereich zwischen der Kegelspitze (17) und dem auf dem jeweiligen Ventildichtsitz zur Anlage kommenden Kreisquerschnitt (18) der Ventilkörper (14) wenigstens eine Ausnehmung (19) in die Kegelkontur eingeformt ist.

6. Unterdruckverteilerdose nach Anspruch 1, **dadurch gekennzeichnet,** daß die Ränder (12) der Durchbüche (11) wulstförmig in der Art von Rundschnurdichtringen in die Membrandichtung (5) eingeformt sind.

## Revendications

1. Boîte de distribution de dépression comprenant un raccord d'aspiration et plusieurs raccords de dépression prévus sur un boîtier, dont les raccords de dépression prévus pour ne raccorder que sélectivement des conduites de dépression sont équipés de clapets anti-retour chargés par ressort dont la force de précontrainte élastique est supérieure à la force de différence de pression pouvant se produire au maximum entre la pression ambiante et la dépression, et dont l'effet de fermeture étanche n'est supprimé que par le branchement des conduites de dépression qui doivent être raccordées sélectivement et par la translation mécanique de leur élément obturateur provoquée par les conduites de dépression, caractérisée en ce que le boîtier de la boîte de distribution de dépression (1) est réalisé en deux parties et est isolé de l'extérieur à joint étanche par une garniture élastique d'étanchéité sous forme de membrane (5), serrée de tous côtés entre les deux parties (2, 3) du boîtier et qui présente dans la région du débouché des raccords de dépression (7, 7'), des ouvertures traversantes (11), en un nombre qui correspond au nombre des raccords de dépression (7, 7'), et en ce que les ouvertures traversantes (11) de la garniture d'étanchéité sous forme de membrane (5) présentent, le long de leurs bords (12), des surfaces d'étanchéité constituant, d'une part, des sièges pour les clapets anti-retour (13) des raccords de dépression (7, 7') et, d'autre part, des bagues d'étanchéité pour les conduites de dépression (8) qui leur sont raccordées.

2. Boite de distribution de dépression selon la revendication 1, comprenant au moins une soupape de protection qui s'ouvre à l'encontre de la force d'un ressort lorsqu'elle est sollicitée par la dépression à travers le raccord d'aspiration, interposée entre le raccord d'aspiration et au moins un raccord de dépression, et qui s'applique contre une paroi intérieure du boîtier par une surface annulaire de contact lorsque la pression ambiante pénètre dans la boîte de distribution, caractérisée en ce que la soupape de protection (26) est incorporée en une seule pièce dans la garniture d'étanchéité en forme de membrane (5), en constituant un segment soufflet roulant (20) muni d'une ouverture (27) située à l'intérieur de la surface de contact (24), le segment soufflet roulant (20) étant serré de tous côtés entre les demi-boîtiers (2, 3) et présentant au moins une autre ouverture qui traverse sa zone de serrage, en dehors de la surface de contact (24) et qui est intercalée, sur le trajet de l'écoulement de l'air allant du raccord de dépression au raccord d'aspiration, entre le clapet anti-retour (13) prévu sur le raccord de dépression correspondant (7') et la soupape de protection (26).

3. Boîte de distribution de dépression selon la revendication 2, caractérisée en ce qu'il est prévu, les uns à côté des autres, des raccords de dépression (7) obturables seulement par un clapet anti-retour (13) et des raccords de dépression (7') obturables par un clapet anti-retour (13) et une soupape de protection (26).

4. Boîte de distribution de dépression selon une des revendications précédentes, caractérisée en ce que les raccords de dépression (7, 7') et le raccord d'aspiration (6) présentent des languettes élastiques de retenue (9) munies de mentonnets de verrouillage (10), qui permettent un branchement et un verrouillage simples des conduites de dépression à raccorder (8).

5. Boîte de distribution de dépression selon la revendication 1, caractérisée en ce que les éléments obturateurs (14) des clapets anti-retour (13) présentent un profil conique à leurs extrémités qui sont dirigées vers leur raccord de dépression respectif (7, 7') et en ce qu'au moins un évidement (19) est formé dans le profil conique, dans la région comprise entre la pointe (17) du cône et la section circulaire (18) des éléments obturateurs (14) qui vient s'appuyer sur le siège du clapet.

6. Boîte de distribution de dépression selon la revendication 1, caractérisée en ce que les bords (12) des ouvertures traversantes (11) sont moulés en bourrelets dans la garniture d'étanchéité en forme de membrane pour constituer des bagues d'étanchéité du type joint torique.

## Claims

1. A negative pressure distributor with a suction connection and a plurality of negative pressure connections on a housing, on which the negative pressure connections which are provided for optional connection of negative pressure lines are provided with spring-loaded non-return valves, the initial spring force of which is greater than the maximum likely pressure differential force of ambient and negative pressure and the sealing effect of which is cancelled out only by insertion of the optionally connected negative pressure lines and mechanical displacement of their valve bodies by the negative pressure lines, characterised in that the housing of the negative pressure distributor (1) is in two parts and is sealed in respect of the outside ambient by a flexible diaphragm seal (5) clamped on all sides between the two housing parts (2, 3) and comprising in the mouth region of the negative pressure connections (7, 7') a number of apertures (11) corresponding to the number of negative pressure connections (7, 7') and in that the apertures (11) of the diaphragm seal (5) have on their edges (12) sealing surfaces constructed on the one hand as valve seals for the non-return valves (13) of the negative pressure connections (7, 7') and on the other as annular seals for the connected negative pressure lines (8).

2. A negative pressure distributor according to Claim 1 with at least one protective valve which opens against spring force when negative pressure is applied via the suction connection and which is disposed between the suction connection and at least one negative pressure connection and which upon penetration of ambient pressure into the distributor has an annular contact surface which bears on an inside wall of the housing, characterised in that the protective valve (26) is formed into the diaphragm seal (5) in one piece as a portion (20) of a roller bellows with an aperture (27) within the contact surface (24), the roller bellows portion (20) being clamped on all sides between the housing parts (2, 3) and having at least one further aperture (28) outside the contact surface (24) and extending through its clamping zone and which - in relation to an air flow from negative pressure to suction pressure is disposed between the non-return valve (13) and the relevant negative pressure connection (7') and the protective valve (26).

3. A negative pressure distributor according to Claim 2, characterised in that both negative pressure connections (7) which can be closed only by a non-return valve (13) and also negative pressure connections (7) are provided which can only be closed by a non-return valve (13) and a protective valve (26).

4. A negative pressure distributor according to one of the preceding Claims, characterised in that the negative pressure connections (7, 7') and the suction connection (6) have resiliently mounted supporting tongues (9) with projections (10) which permit of simple insertion and locking of the negative pressure lines (8) which have to be connected.

5. A negative pressure distributor according to Claim 1, characterised in that the valve bodies (14) of the non-return valves (13) are at their ends which are towards the relevant negative pressure connections (7, 7') provided with a cone contour and in that in the region between the tip (17) of the cone and the cross-section (18) of the valve bodies (14) which come to bear on the relevant valve seat, at least one recess (19) is formed into the contours of the cone.

6. A negative pressure distributor according to Claim 1, characterised in that the edges (12) of the apertures (11) are formed like beads into the diaphragm seal, in the manner of round cord seals.